(19) **Europäisches Patentamt**
**European Patent Office**
**Office européen des brevets**

(11) **EP 1 173 726 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(51) Int Cl.$^7$: **G01D 5/00**, G01D 5/38

(21) Anmeldenummer: **00938601.2**

(86) Internationale Anmeldenummer:
**PCT/EP00/03441**

(22) Anmeldetag: **15.04.2000**

(87) Internationale Veröffentlichungsnummer:
**WO 00/065310 (02.11.2000 Gazette 2000/44)**

(54) **OPTISCHE POSITIONSMESSEINRICHTUNG**

OPTICAL DEVICE FOR MEASURING POSITION

DISPOSITIF OPTIQUE DE MESURE DE POSITION

(84) Benannte Vertragsstaaten:
**DE FR GB IT**

(30) Priorität: **22.04.1999 DE 19918101**

(43) Veröffentlichungstag der Anmeldung:
**23.01.2002 Patentblatt 2002/04**

(73) Patentinhaber: **Dr. Johannes Heidenhain GmbH
83292 Traunreut (DE)**

(72) Erfinder:
• **HOLZAPFEL, Wolfgang
D-83119 Obing (DE)**
• **MAYER, Elmar
D-83365 Nussdorf (DE)**

(56) Entgegenhaltungen:
**US-A- 4 051 367        US-A- 5 886 352**

**Beschreibung**

Die vorliegende Erfindung betrifft eine optische Positionsmeßeinrichtung, insbesondere ein sog. 4-Gitter-Meßsystem.

Derartige Positionsmeßeinrichtungen umfassen in der Regel eine Lichtquelle, eine davor angeordnete Sendeteilung, eine Meßteilung, eine Abtastteilung sowie eine Detektoranordnung mit einer periodischen Struktur aus einzelnen Detektorelementen, die die vierte Teilung bildet. Die Lichtquelle, die Sendeteilung, die Abtastteilung sowie die Detektoranordnung sind hierbei in der Regel in einer Abtasteinheit angeordnet, welche relativ zur Meßteilung in einer bestimmten Meßrichtung beweglich ist. Derartige Systeme können hierbei sowohl als Durchlicht- wie auch als Auflichtsysteme ausgelegt werden; ebenso können rotatorische Anordnungen ebenso realisiert werden wie lineare Anordnungen. In der WO 97/16704 ist beispielsweise eine entsprechende Meßeinrichtung offenbart. Hinsichtlich der Dimensionierung der Detektoranordnung enthält diese Druckschrift keine weiteren Hinweise.

Aus der Veröffentlichung von R.M. Pettigrew mit dem Titel "Analysis of Grating Imaging and its Application to Displacement Metrology" in SPIE Vol. 136 1st European Congress on Optics Applied to Metrology (1977), S. 325 - 332 sind ebenfalls verschiedenste Varianten von Mehr-Gittergebern bekannt. Auf Seite 328 dieser Veröffentlichung werden auch die Abbildungsverhältnisse bei einem Mehr-Gittergeber diskutiert, bei dem eine divergente Beleuchtung vorgesehen ist. Unter divergenter Beleuchtung sei hierbei verstanden, daß der verwendeten Lichtquelle keine Kollimatoroptik nachgeordnet ist, d.h. die von der Lichtquelle emittierten Strahlenbündel treffen nicht exakt parallel auf die erste Teilung im Strahlengang. Die Diskussion der Abbildungsverhältnisse führt hierbei zu dem Ergebnis, daß der Vergrößerungsfaktor im Strahlengang durch eine Anordnung bestimmt ist, bei der sich der Vergrößerungsfaktor aus einer zentrischen Streckung ausgehend von der Meßteilungsebene bestimmt. Der Vergrößerungsfaktor ist insofern ein wichtiger Parameter bei einem System mit divergenter Beleuchtung als die optimale geometrische Dimensionierung der Detektoranordnung bzw. der Detektorelemente entscheidend von der Kenntnis des Vergrößerungsfaktors im Strahlengang abhängt.

In der Praxis hat sich jedoch gezeigt, daß ein Strahlengangmodell wie in der erwähnten Veröffentlichung vorgeschlagen zu einem 4-Gitter-Meßsystem führt, das einen schlechten Modulationsgrad der erzeugten Abtastsignale aufweist.

Aufgabe der vorliegenden Erfindung ist es daher, eine optische Positionsmeßeinrichtung auf Basis eines 4-Gitter-Meßsystem anzugeben, bei welchem die oben diskutierten Probleme möglichst minimiert werden. Insbesondere ist eine auf die jeweiligen Systemvoraussetzungen hin optimierte Ausgestaltung der Detektoranordnung in einer derartigen Positionsmeßeinrichtung anzugeben, die einen hinreichenden Modulationsgrad der positionsabhängigen Abtastsignale gewährleistet.

Diese Aufgabe wird gelöst durch eine optische Positionsmeßeinrichtung mit den Merkmalen des Anspruches 1.

Vorteilhafte Ausführungsformen der erfindungsgemäßen optischen Positionsmeßeinrichtung ergeben sich aus den Maßnahmen, die in den abhängigen Patentansprüchen aufgeführt sind.

Die erfindungsgemäßen Maßnahmen stellen nunmehr sicher, daß für beliebige Systemkonfigurationen einer optischen Positionsmeßeinrichtung basierend auf dem 4-Gitter-Prinzip mit divergenter Beleuchtung eine optimierte Ausgestaltung der Detektoranordnung angegeben werden kann. Hierdurch ist insbesondere ein guter Modulationsgrad der positionsabhängigen Abtastsignale gewährleistet.

Desweiteren gestattet die exakte Kenntnis des oben erwähnten Vergrößerungsfaktors auch eine Dimensionierung der erfindungsgemäßen Positionsmeßeinrichtung, die eine bestimmte Toleranz hinsichtlich des Abtastabstandes gewährleistet. Es ist demzufolge auch eine Abweichung des tatsächlichen Abtastabstandes von einem idealen Abtastabstand möglich, ohne daß die Signalqualität entscheidend negativ beeinflußt wird.

Als weiterer Vorteil des erfindungsgemäßen 4-Gitter-Systems ist aufzuführen, daß die Detektoranordnung hierbei nicht unmittelbar benachbart zur relativ dazu beweglichen Meßteilung angeordnet ist. Innerhalb der Abtasteinheit ist vor der Detektoranordnung vielmehr noch die Abtastteilung angeordnet, die die Detektoranordnung vor einer eventuellen Beschädigung durch die Meßteilung im Meßbetrieb schützt.

Selbstverständlich läßt sich die erfindungsgemäße Positionsmeßeinrichtung sowohl als Auflicht- wie auch als Durchlichtsystem realisieren. Ebenso ist es möglich, lineare als auch rotatorische Anordnungen erfindungsgemäß auszugestalten.

Weitere Vorteile sowie Einzelheiten der erfindungsgemäßen optischen Positionsmeßeinrichtung ergeben sich aus der nachfolgenden Beschreibung mehrerer Ausführungsbeispiele anhand der beiliegenden Zeichnungen.

Dabei zeigt

Figur 1        eine schematische Darstellung der erfindungsgemäßen Positionsmeßeinrichtung in einer gestreckten Darstellung;

Figur 2        eine Draufsicht auf ein Ausführungsbeispiel einer geeigneten Detektoranordnung der erfindungsgemäßen Positionsmeßeinrichtung;

Figur 3 - 6     jeweils eine weitere schematische Darstellung von Teilen der erfindungsgemäßen Positionsmeßeinrichtung, anhand der jeweils relevante Parameter des Systems erläutert werden.

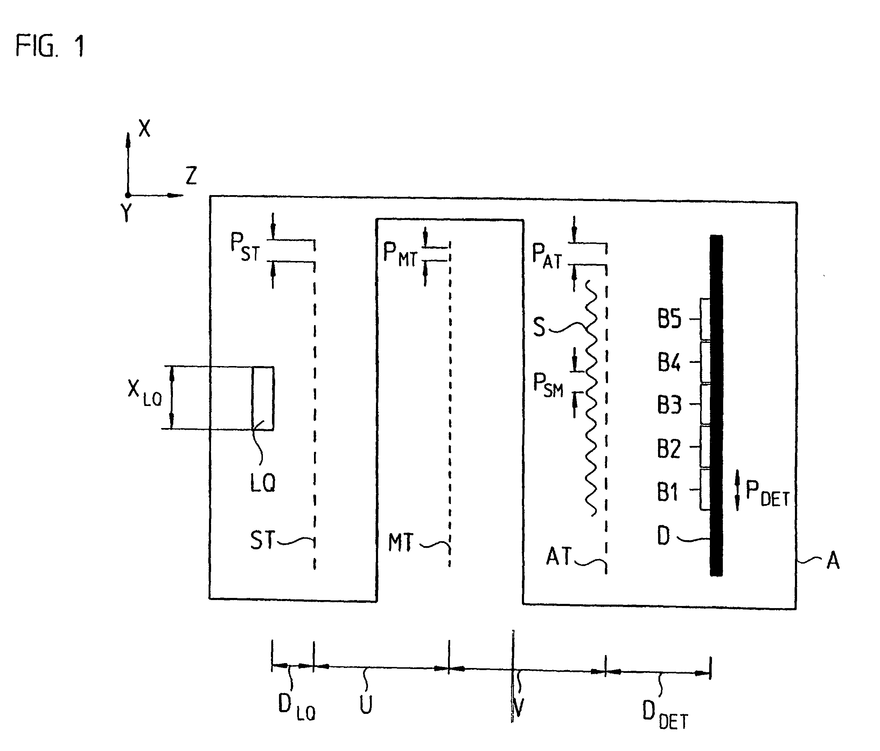

In Figur 1 ist die erfindungsgemäße optische Positionsmeßeinrichtung in einer gestreckten Darstellung gezeigt, anhand der nachfolgend wichtige geometrische Parameter erläutert werden. Bereits an dieser Stelle sei darauf hingewiesen, daß die Darstellung in Figur 1 selbstverständlich keineswegs maßstäblich korrekt ist, sondern lediglich in schematischer Form zur Erläuterung der verschiedenen Geometrieparameter dienen soll.

Wie bereits oben angedeutet ist die erfindungsgemäße Positionsmeßeinrichtung als sog. 4-Gitter-Meßsystem ausgebildet und umfaßt ferner eine Lichtquelle LQ, eine Sendeteilung ST, eine Maßstabteilung MT, eine Abtastteilung AT sowie eine periodisch ausgestaltete Detektoranordnung D. Die vierte Teilung bzw. das vierte Gitter der Positionsmeßeinrichtung wird demzufolge durch die periodische Detektoranordnung D gebildet.

Wie in Figur 1 angedeutet, sind die Lichtquelle LQ, die Sendeteilung ST, die Abtastteilung AT sowie die Detektoranordnung in einer gemeinsamen Abtasteinheit A angeordnet, die gegenüber der Meßteilung MT in der Meßrichtung x beweglich ist. Die Darstellung der Abtasteinheit A in Figur 1 ist bei der gewählten Meßrichtung x nicht vollkommen korrekt, sondern wurde lediglich gewählt, um zu veranschaulichen, welche Komponenten zur Abtasteinheit A gehören.

An dieser Stelle sei darauf hingewiesen, daß neben der in Figur 1 aus Gründen der besseren Übersichtlichkeit veranschaulichten Durchlichtvariante auch eine entsprechend ausgebildete Auflichtvariante der erfindungsgemäßen Positionsmeßeinrichtung realisierbar ist. Der wesentliche Unterschied ist in einer derartigen Variante, daß dann eine reflektierende Meßteilung MT erforderlich ist, während in Fig. 1 eine Durchlicht-Meßteilung MT eingesetzt wird. Im Fall der Auflicht-Meßteilung sind ferner die Teilungen ST und AT vorzugsweise gemeinsam auf einem transparenten Täger bzw. Substrat angeordnet.

Die erfindungsgemäße Positionsmeßeinrichtung kann z.B. zur exakten Positionsbestimmung in einer numerisch gesteuerten Werkzeugmaschine eingesetzt werden. Hierzu sind die Abtasteinheit A und die Meßteilung MT mit entsprechend zueinander verschiebbaren Komponenten derselben verbunden. Die erzeugten positionsabhängigen Ausgangssignale werden einer numerischen Werkzeugmaschinensteuerung zur Weiterverarbeitung zugeführt.

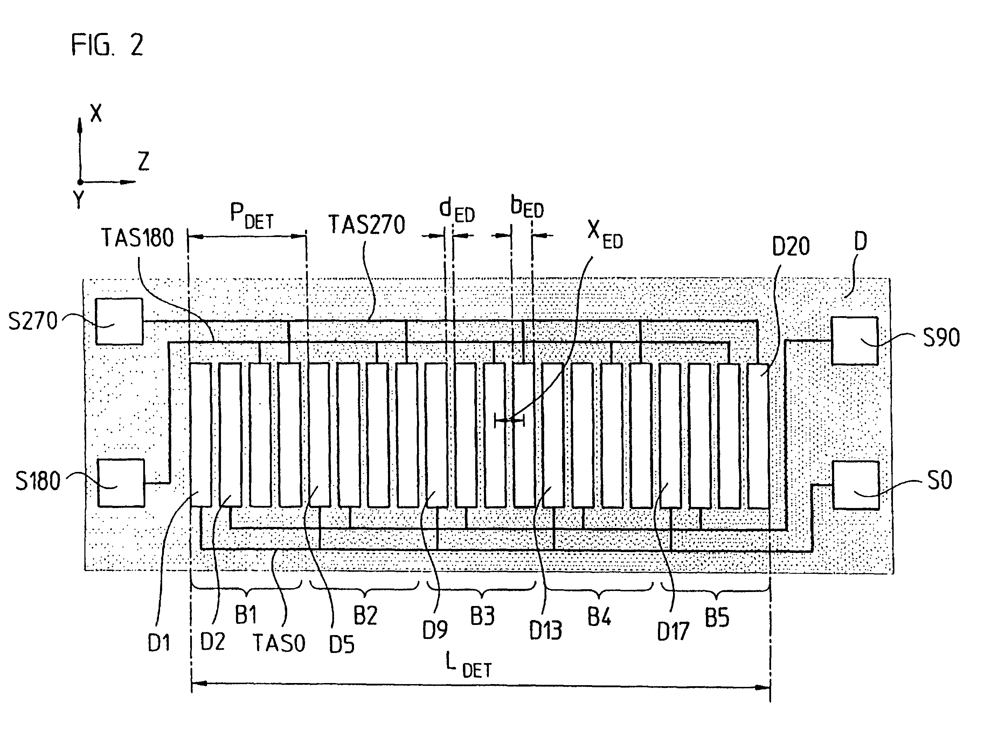

Die Detektoranordnung D der Positionsmeßeinrichtung umfaßt insgesamt M periodisch angeordnete Blöcke B1 - BM mit jeweils k einzelnen Detektorelementen; im gezeigten Beispiel ist M = 5 und k = 4 gewählt. Die Detektorperiode der Blöcke B1 von Detektorelementen wird im Verlauf der weiteren Beschreibung mit $P_{DET}$ bezeichnet. Die einzelnen k Detektorelemente der Blöcke B1 - B5 sind in der schematischen Darstellung in Figur 1 nicht eingezeichnet. In Bezug auf die exakte Ausgestaltung der Detektoranordnung D sei auf die nachfolgende Beschreibung der Figur 2 verwiesen.

Mit $D_{LQ}$ wird gemäß Figur 1 der Abstand zwischen der Lichtquelle LQ und der Sendeteilung ST bezeichnet. Die Lichtquelle LQ hat in Meßrichtung x die Ausdehnung $x_{LQ}$. Die Größe u gibt den Abstand zwischen der Sendeteilung ST und der Meßteilung MT an; die Größe v hingegen gibt den Abstand zwischen der Meßteilung MT und der Abtastteilung AT an. Mit $D_{DET}$ wird der Abstand zwischen der Abtastteilung AT und der Detektoranordnung D bezeichnet. Die Größen $P_{ST}$, $P_{MT}$ und $P_{AT}$ geben jeweils die Teilungsperioden der Sendeteilung ST, der Meßteilung MT und der Abtastteilung AT an.

Im dargestellten Fall eines Durchlichtsystemes kann selbstverständlich der Abstand u zwischen der Sendeteilung ST und der Meßteilung MT und der Abstand v zwischen Meßteilung MT und Abtastteilung AT auch ungleich zueinander gewählt werden. In einem Auflichtsystem hingegen gilt in der Regel u = v für die Abstände der Meßteilung MT zu den jeweils benachbarten Teilungen ST und AT.

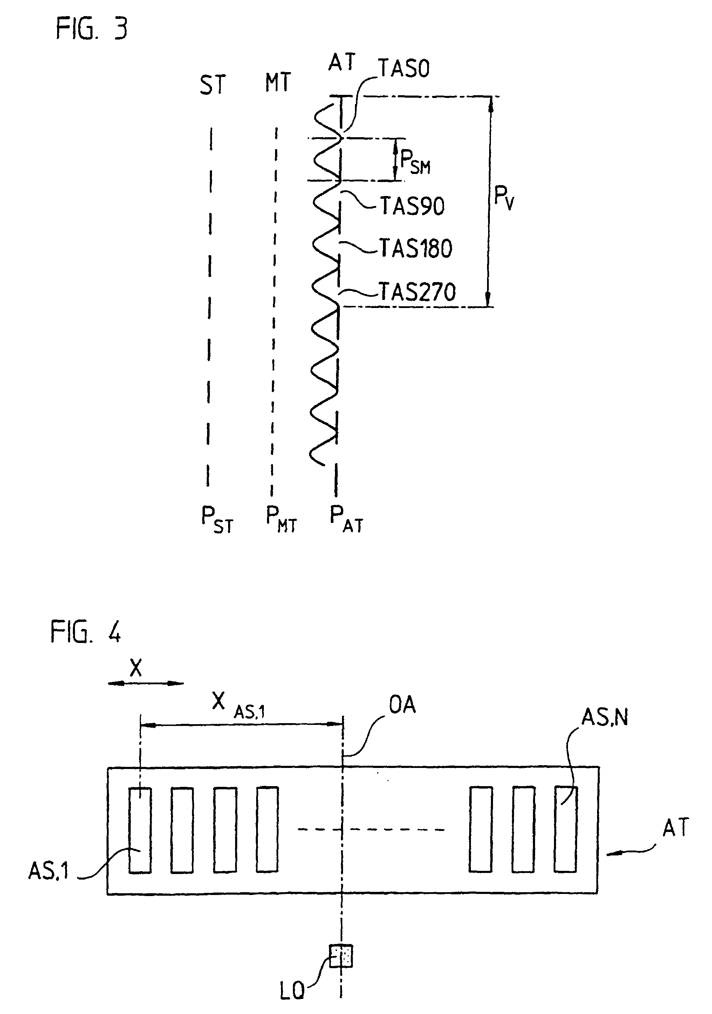

Die von der Lichtquelle LQ emittierten Strahlenbündel durchlaufen die verschiedenen Teilungen ST und MT und liefern in der Ebene der Abtastteilung AT ein periodisches Streifenmuster S mit der Streifenmusterperiode $P_{SM}$. Das Streifenmuster S erfährt im Fall der Relativbewegung von Abtasteinheit A und Meßteilung MT eine verschiebungsabhängige Modulation, die letztlich zur Bestimmung der jeweiligen Relativposition von Meßteilung MT und Abtasteinheit A erfaßt wird. Mit Hilfe der periodisch ausgestalteten Abtastteilung AT erfolgt hierbei eine sogenannte Vernier-Abtastung des Streifenmusters S; hierzu sei auch auf die Darstellung in Figur 3 verwiesen. Die verwendete Abtastteilung AT weist dabei eine Teilungsperiode $P_{AT}$ auf, die sich sowohl von der Periode $P_{SM}$ des Streifenmusters S als auch von den Teilungsperioden $P_{ST}$, $P_{MT}$ der Sende- und Meßteilung ST, MT unterscheidet. Durch die benachbarten, durchlässigen Bereiche der Abtastteilung AT gelangen dann Lichtanteile des Streifenmusters S. Die verschiedenen Lichtanteile werden dann über die optoelektronischen Detektorelemente in elektrische Signalanteile bzw. Teil-Abtastsignale TAS0 - TAS270 mit definierten relativen Phasenbeziehungen umgewandelt. Beispielsweise können durch benachbarte, durchlässige Bereiche der Abtastteilung AT Lichtanteile mit jeweils 90° Phasenversatz in Richtung der Detektoranordnung D gelangen, wie dies in Figur 3 angedeutet ist. Jeder der durchlässigen Bereiche der Abtastteilung AT ist ferner genau einem der einzelnen k Detektorelemente in der Detektoranordnung D zugeordnet. Daher wiederum erfaßt jedes Detektorelement auf Seiten der Detektoranordnung D einen der Lichtanteile und erzeugt derart eines der Teil-Abtastsignaie TAS0 - TAS270 mit definierter Phasenbeziehung. Die Detektorelemente werden auf Seiten der Detektoranordnung D bzw. in der Abtasteinheit A geeignet verschaltet, wie dies nachfolgend anhand von Figur 2 noch erläutert wird, so daß letztlich Abtastsignale S0 - S270 zur Weiterverarbeitung an eine nachgeordnete - nicht gezeigte - Auswerteeinheit übermittelt werden können.

Erfindungsgemäß wurde nunmehr erkannt, daß die Periodiziät der Detektoranordnung, d.h. die Detektorperiode $P_{DET}$, eine entscheidende Bedeutung im Zusammenhang mit der Erzeugung präziser, positionsabhängiger Abtastsignale hat. Die optimale Detektorperiode $P_{DET}$ läßt sich erfindungsgemäß in Abhängigkeit bestimmter Geometrie-Parameter der Positionsmeßeinrichtung gemäß folgender Gleichung (1) angeben:

$$P_{DET} = m * l * P_V \qquad\qquad (Gl.\ 1)$$

Für den Parameter I gilt hierbei : I = 1, 2, 3, ...
Die nachfolgend als Vergrößerungsfaktor bezeichnete Größe m ergibt sich gemäß folgender Gleichung (2) als:

$$m = \left(1 + D_{DET}/(u + v + D_{LQ})\right) \qquad (Gl.\ 2)$$

Wird wie oben angedeutet u = v gewählt, so resultiert die Gleichung (2'):

$$m = \left(1 + D_{DET}/(2 * u + D_{LQ})\right) \qquad (Gl.\ 2')$$

Die in Gleichung (1) eingehende Größe $P_V$ sei nachfolgend als Vernier-Periode bezeichnet. Zur anschaulichen Interpretation der Größe $P_V$ sei erneut auf die Figur 3 verwiesen.
Im Fall I = 1 beschreibt gemäß der Darstellung in Figur 3 die Vernier-Periode $P_V$ diejenige Periodizität in der Ebene der Abtastteilung AT, durch die eine mehrfache Reproduktion der phasenverschobenen Teil-Abtastsignale TAS0 - TAS270 in Meßrichtung x möglich ist. Anschaulich stellt $P_V$ im gezeigten Beispiel mit I = 1 diejenige Distanz in der Ebene der Abtastteilung AT dar, über die vier phasenverschobene Teil-Abtastsignale TAS0 - TAS270 aus vier benachbarten durchlässigen Bereichen gewonnen werden. Im dargestellten Beispiel gilt demzufolge $P_V = 4 * P_{AT}$.
Allgemein ergibt sich die Vernierperiode $P_V$ in der Ebene der Abtastteilung AT in Abhängigkeit der Streifenmusterperiode $P_{SM}$ gemäß folgender Gleichung (3):

$$1/P_V = |1/P_{SM} - 1/P_{AT}| \qquad\qquad Gl.\ (3)$$

Werden hierbei k um 360°/k phasenverschobene Teil-Abtastsignale erzeugt, ergibt sich bei einer exakten Zuordnung von durchlässigen Bereichen der Abtastteilung zu bestimmten Detektorelementen die Vernierperiode $P_V$ gemäß der Gl. (3'):

$$P_V = ((k * p)/l \pm 1) * P_{SM} \qquad\qquad Gl.\ (3'),$$

Im Fall der Gl. (3') wurde die Teilungsperiode der Abtastteilung gemäß Gl. (4) gewählt:

$$P_{AT} = (1 \pm l/(k * p)) * P_{SM} \qquad\qquad Gl.\ (4)$$

Hierbei gilt in Gl. (3) und (4) : p = 1, 2, 3, ..; ferner ist I teilerfremd zu k zu wählen.
Der Parameter k gibt in diesen Gleichungen die Anzahl der detektierten verschiedenen Phasenlagen an; der Parameter I beschreibt die Anzahl der einer Detektorperiode zugeordneten Vernierperioden, während der Parameter p wiederum die Anzahl der Abtastfelder bzw. Abtastspalte spezifiziert, die einem Detektorelement zugeordnet sind.

Wird hierbei p > 1 gewählt, so können innerhalb einer Abtastperiode $P_{AT}$ mehrere Abtastspalte bzw. durchlässige Bereiche angeordnet werden. Der Abstand $d_{AS}$ benachbarter Abtastspalte ist hierbei in einer vorteilhaften Ausführungsform $d_{AS} = w * P_{SM}$ mit w = 0, 1, 2, ...p-1. Eine derartige Ausgestaltung erlaubt jeweils die Zuordnung mehrerer gleichphasiger Abtastspalte zu einem Detektorelement.

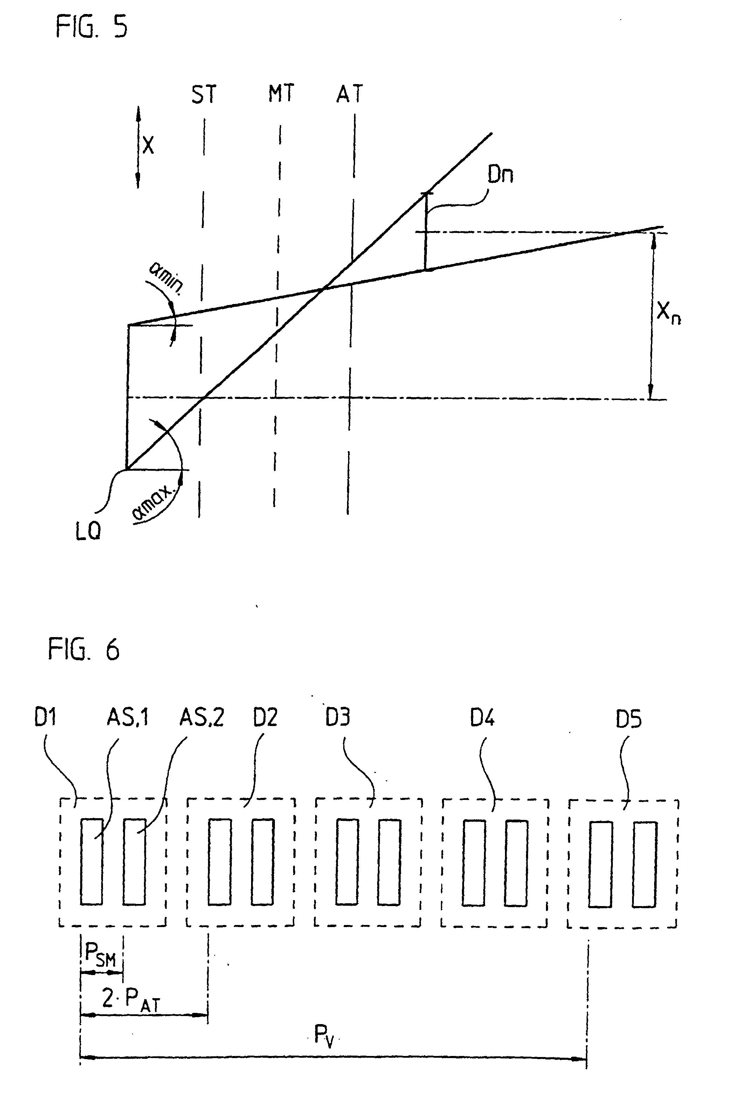

Eine schematisierte Draufsicht auf einen Teil der Abtastebene sowie der Detektorebene eines derartigen Ausführungsbeispieles zeigt Figur 6. Hierbei sind pro Detektorelement D je zwei Abtastspalte AS vorgesehen. Ein entsprechendes zahlenmäßiges Ausführungsbeispiel wird nachfolgend im Verlauf der Beschreibung noch erläutert.

Bei der Herleitung der Gleichung (2), d.h. der exakten Bestimmung des Vergrößerungsfaktors m, wurde erfindungsgemäß vorausgesetzt, daß das Zentrum der zur Herleitung zugrundegelegten zentrischen Streckung in der Ebene der Lichtquelle LQ liegt. Demgegenüber legte die oben zitierte Veröffentlichung von R.M. Pettigrew nahe, von einem Zentrum auszugehen, das in der Ebene der Meßteilung MT liegt. Diese Annahme lieferte jedoch Detektorperioden $P_{DET}$ für die Positionsmeßeinrichtung, die im praktischen Einsatz zu groß wären. Dadurch wiederum würde ein Modulationsgrad der Abtastsignale resultieren, der insbesondere bei große Abtastfeldern zu niedrig wäre.

Wird die Detektorperiode $P_{DET}$ hingegen gemäß den obigen Gleichungen (1) und (2) gewählt, so lassen sich auch große Abtastfelder bei hohem Modulationsgrad der Ausgangssignale abtasten. Große Abtastfelder wiederum bieten eine deutlich höhere Unempfindlichkeit gegenüber eventuellen Verschmutzungen.

Eine vorteilhafte Ausgestaltung einer geeigneten Detektoranordnung D zeigt Figur 2 in einer Draufsicht auf die Detektorebene. Die dargestellte Ausführungsform der Detektoranordnung D dient zur Erzeugung von vier, verschiebungsabhängig modulierten Ausgangssignalen S0, S90, S180 und S270, die jeweils um 90° phasenversetzt zueinander sind. Selbstverständlich sind im Rahmen der vorliegenden Erfindung auch entsprechend modifizierte Varianten realisierbar, die etwa andere Phasenbeziehungen zwischen den Ausgangssignalen liefern.

Auf Seiten der Detektoranordnung D sind im Beispiel der Figur 2 ingesamt M = 5 Blöcke B1 - B5 mit jeweils mehreren einzelnen Detektorelementen D1 - D20 in Meßrichtung x periodisch angeordnet. Pro Block B1 - B5 sind in diesem Ausführungsbeispiel jeweils k = 4 einzelne Detektorelemente D1 - D20 vorgesehen, die allesamt identisch ausgebildet sind. Insgesamt umfaßt das Beispiel n = 20 separate Detektorelemente D1 - D20. Die Detektorelemente D1 - D20 sind jeweils im Abstand $d_{ED}$ zueinander angeordnet, wobei auch der Abstand $d_{ED}$ benachbarter Detektorelemente D1 - D20 über die gesamte Detektoranordnung D identisch gewählt wird. Jedes Detektorelement D1 - D20 weist eine schmale Rechteckform auf, wobei die Rechteck-Längsachse in der Detektorebene senkrecht zur Meßrichtung x orientiert ist, d.h. in der angegebenen y-Richtung. Pro Detektorelement wird bei der Abtastung des periodischen Streifenmusters S ein Teil-Abtastsignal TAS0 - TAS270 mit einer bestimmten definierten Phasenlage erzeugt.

Die Detektorperiode $P_{DET}$ wurde erfindungsgemäß entsprechend den vorher diskutierten Gleichungen (1) und (2) gewählt und gibt demzufolge wie in Fig. 2 erkennbar die Länge eines Blockes B1 - B5 mit vier Detektorelementen D1 - D20 an. Im Fall der gezeigten Anordnung mit M = 5 Blöcken B1 - B5 ergibt sich demzufolge die Länge $L_{DET}$ in der Detektoranordnung D als $L_{DET} = M * P_{DET} = 5 * P_{DET} - d_{ED}$.

Wie ebenfalls in Figur 2 erkennbar, ist in der dargestellten Ausführungsform jedes k-te, d.h. jedes vierte Detektorelement D1 - D20 miteinander elektrisch verbunden, d.h. das von links aus erste Detektorelement D1 ist mit dem von links aus fünften Detektorelement D5, mit dem neunten mit dem dreizehnten sowie mit dem siebzehnten Detektorelement D9, D13, D17 verbunden. Analog hierzu sind die anderen Detektorelemente miteinander verbunden. Es existieren demzufolge ingesamt k = 4 Gruppen von jeweils parallel miteinander verschalteten Detektorelementen D1 - D20, die im Fall der gezeigten Anordnung um jeweils 90° phasenversetzte Ausgangssignale S0, S90, S180 und S270 liefern. Die Ausgangssignale S0, S90, S180 und S270 sind an den angedeuteten Kontaktpads der Detektoranordnung D abgreifbar. Jede Gruppe derart verschalteter Detektorelemente liefert demzufolge Ausgangssignale mit einer bestimmten Phasenbeziehung, wobei sich die Phasenlagen der k = 4 verschiedenen Gruppen in dieser Ausführungsvariante jeweils um 90° unterscheiden.

In einer alternativen Ausführungsform könnte beispielsweise auch k = 3 gewählt werden, womit ein Phasenversatz von 120° zwischen den Ausgangssignalen resultieren würde. Grundsätzlich ergibt sich in Abhängigkeit vom Parameter k demzufolge ein Phasenversatz von 360°/k zwischen den Ausgangssignalen der k verschiedenen Gruppen von verschalteten Detektorelementen.

Im allgemeinen Fall sind pro Block jeweils k einzelne Detektorelemente in äquidistanten Abständen $d_{ED}$ angeordnet. Der Abstand $x_{ED}$ zwischen den Mittellagen benachbarter Detektorelemente beträgt $x_{ED} = d_{ED} + b_{ED}$. Mit $d_{ED}$ bzw. $b_{ED}$ werden gemäß Figur 2 die Abstände bzw. die Breiten der einzelnen Detektorelemente bezeichnet.

Die Abstände zwischen den benachbarten Detektorelementen einer Gruppe, d.h. also z.B. die Abstände zwischen dem ersten und fünften Detektorelement D1, D5, zwischen dem fünften und neunten Detektorelement D5, D9 etc. betragen jeweils ein ganzzahliges Vielfaches der Detektorperiode $P_{DET}$. Im dargestellten Beispiel der Figur 2 beträgt dieser Abstand jeweils eine einfache Detektorperiode $P_{DET}$.

Eine weiterer wichtiger Parameter bei der vorteilhaften Ausgestaltung der Detektoranordnung D ist auch die Breite $b_{ED}$ eines einzelnen Detektorelementes D1 - D20, d.h. die Breite eines rechteckförmigen Detektorelementes D1 - D20 in Meßrichtung x. Inbesondere wichtig ist hierbei die Forderung, daß ein Übersprechen zwischen benachbarten phasenversetzten Detektorelementen möglichst vermieden wird. Dies bedeutet letztlich, daß die definierte Zuordnung der Phasenlage eines Signalanteiles aus einem durchlässigen Bereich der Abtastteilung zu einem bestimmten Detektorelement stets gewährleistet ist.

Im Fall mit k = 4 Detektorelementen pro Block B1 - B5 und einer Detektorperiode $P_{DET}$ würde die maximale Breite $b_{ED}$ für ein einzelnes Detektorelement demzufolge $P_{DET}/4$ betragen. Hierbei würde zwar jedes einzelne Detektorelement D1 - D20 eine maximale Signalintensität registrieren; die oben angesprochene Forderung nach möglichst geringem Übersprechen zwischen benachbarten Detektorelementen kann unter bestimmten Umständen, d.h. unter bestimmten gegebenen geometrischen Rahmenbedingungen, bei einer derart gewählten Breite jedoch nicht immer erfüllt werden.

Im Rahmen der vorliegenden Erfindung wurde nunmehr desweiteren erkannt, wie auch die optimierte Breite $b_{ED,n}$ des einzelnen, n-ten Detektorelementes D1 - D20 in Abhängigkeit verschiedener Systemparameter einer derartigen Positionsmeßeinrichtung zu bestimmen ist. Die nachfolgend aufgeführte Gleichung (5) liefert eine Detektorelement-Breite $b_{ED,n}$ für das n-te Detektorelement, die einen guten Kompromiß zwischen der Forderung nach möglichst geringem Übersprechen zwischen benachbarten Detektorelementen D1 - D20 und einer möglichst hohen Signalintensität, die von jedem Detektorelement D1 - D20 registriert wird, darstellt. Es läßt sich darüber eine Mindestbreite für jedes einzelne der insgesamt n Detektorelemente in der Detektoranordnung angegeben, um eine hinreichende Lichtintensität bei gleichzeitig vermiedenem Übersprechen sicherzustellen:

$$b_{ED,n} \geq (\tan \alpha_{max} - \tan \alpha_{min}) * D_{DET} \qquad \text{Gl. (5)}$$

Hierbei gilt:

$$\alpha_{min} = [(\arctan (x_{AS,N} + P_{SM}/2 - x_{LQ}/2)) / (2 * u + D_{LQ})] - \arcsin (q * \lambda/P_{MT}) \qquad \text{Gl. (5.1)}$$

und

$$\alpha_{max} = [(\arctan (x_{AS,N} + P_{SM}/2 + x_{LQ}/2)) / (2 * u + D_{LQ})] + \arcsin (q * \lambda/P_{MT}) \qquad \text{Gl. (5.2)}$$

wobei

$x_{AS,N}$ : Entfernung des N-ten Abtastspaltes AS von der optischen Achse OA gemäß der Definition in Figur 4

$x_{LQ}$: Ausdehnung der Lichtquelle in Meßrichtung x,

u: Abstand zwischen Sendeteilung und Meßteilung bzw. zwischen Meßteilung und Abtastteilung

$D_{LQ}$: Abstand zwischen Lichtquelle und Sendeteilung

$\lambda$: Wellenlänge der verwendeten Lichtquelle

q: Beugungsordnung an Meßteilung, die primär zur Signalgewinnung beiträgt (0, 1, 2, .....); in der Praxis tragen i.w. die 0. und +/- 1. Beugungsordnungen zur Signalgewinnung bei

$P_{MT}$: Teilungsperiode der Meßteilung

Ferner sei darauf hingewiesen, daß in den Gleichungen (5), (5.1) und (5.2) der Fall mit u = v beschrieben ist, d.h. ein Auflichtsystem. Selbstverständlich lassen sich diese Beziehungen auch problemlos für den Fall u ≠ v modifizieren.

Die in die Gleichung (5) eingehenden Winkel $\alpha_{min}$ und $\alpha_{max}$ können auch anschaulich interpretiert werden. In diesem Zusammenhang sei auf die Figur 5 verwiesen. So wird über $\alpha_{min}$ und $\alpha_{max}$ jeweils der Winkel gegen die Normale auf die Sendeteilung ST beschrieben, der Strahlen zugeordnet ist, die vom Rand einer ausgedehnten Lichtquelle LQ ausgehend noch durch einen gemeinsamen durchlässigen Bereich der Abtastteilung AT treten und auf das gleiche Detektorelement auftreffen.

Abschließend seien zwei konkrete Ausführungsbeispiele für Positionsmeßeinrichtungen angegeben, bei denen die Parameter $P_{DET}$ und $b_{ED}$ in der Detektoranordnung auf Grundlage der oben erläuterten erfindungsgemäßen Überlegungen bestimmt wurden. Die aufgeführten Varianten unterscheiden sich primär durch die jeweils gewählte Lichtquelle.

Im ersten Ausführungsbeispiel mit einer nahezu punktförmigen Lichtquelle LQ seien folgende Parameter gegeben:

| | |
|---|---|
| $x_{LQ} =$ | 0.1 mm |
| $D_{LQ} =$ | 0.2mm |
| $D_{DET} =$ | 0.2mm |
| $u = v =$ | 0.8mm |
| $P_{MT} =$ | 20μm |
| $P_{ST} =$ | 40μm |
| $P_{AT} =$ | 50μm |
| $P_{SM} =$ | 40μm |
| $P_V =$ | 200μm |

Auf Seiten der Abtastteilung wurde die Breite der durchlässigen Bereiche mit 20μm und die Breite der undurchlässigen Bereiche mit 30μm gewählt.

Die Detektorperiode $P_{DET}$ ergibt sich aus diesen Größen mit Hilfe der beiden Gleichungen (1) und (2) zu:

$PD_{ET} =$    232μm

Für die optimale Breite $b_{ED,n}$ eines einzelnen Detektorelementes, das unmittelbar benachbart zur optischen Achse angeordnet ist, ergibt sich mit den weiteren Parametern

$x_n =$    0 (Detektorelement auf optischer Achse)

$d_{ED} =$    13μm

$q =$    0

$\lambda =$    860nm

die Größe $b_{ED,0}$ über die Gleichungen (5), (5.1), (5.2) zu

$b_{ED,0} =$    45μm.

Diese Größe stellt die optimierte Detektorbreite bei Berücksichtigung der q = 0. sowie +/-1. Beugungsordnungen an der Signalgewinnung dar. In der Praxis wird ein Auftreten von Übersprechen aufgrund weiterer beteiligter Beugungsordnungen toleriert, da sich derart eine Filterung von Oberwellenanteilen an den erzeugten Abtastsignalen erreichen läßt. Hierbei kann es sich etwa um das geringfügige Übersprechen der +/- 2. Beugungsordnungen handeln.

Im zweiten, zahlenmäßigen Ausführungsbeispiel der erfindungsgemäßen Vorrichtung wird nunmehr eine ausgedehnte Lichtquelle LQ eingesetzt, d.h. die Größe $x_{LQ}$ ist deutlich größer gewählt als im vorhergehenden Beispiel. Als vorgegebene Parameter des Systems sind aufzuführen:

| | |
|---|---|
| $x_{LQ} =$ | 0.35mm |
| $D_{LQ} =$ | 0.3mm |
| $D_{DET} =$ | 0.35mm |
| $u = v =$ | 0.8mm |
| $P_{MT} =$ | 20μm |
| $P_{ST} =$ | 40μm |
| $P_{AT} =$ | 45μm |
| $P_{SM} =$ | 40μm |
| $P_V =$ | 360μm |

Die Abtastteilung wurde hierbei dergestalt dimensioniert daß innerhalb zweier Abtastteilungsperioden, d.h. innerhalb von 2 * $P_{AT}$ = 90μm, zwei durchlässige Bereiche bzw. Abtastspalte mit einer jeweiligen Breite von 20μm vorgesehen werden. Eine Draufsicht auf einen Teil der Abtastteilung AT sowie einen zugeordneten Ausschnitt der Detektorebene mit den Detektorelementen D1 - D5 dieses Beispieles zeigt Figur 6.

Die Detektorperiode $P_{DET}$ ergibt sich aus diesen Größen mit Hilfe der beiden Gleichungen (1) und (2) zu:

$$P_{DET} = \quad 417\mu m$$

Bei einer derartigen Ausgestaltung der Abtastteilung wird nunmehr den beiden durchlässigen Bereichen AS, 1, AS,2.... pro n * $P_{AT}$ Abtastteilungsperioden auf der Abtastteilung ein Detektorelement D1 - D5 mit der wiederum optimierten Breite $b_{ED,n}$ auf Seiten der Detektoranordnung zugeordnet. Beispielsweise wird den beiden Abtastspalten AS,1 und AS,2 das Detektorelement D1 zugeordnet usw.. Um einen guten Modulationsgrad sicherzustellen, wird der Abstand der beiden Abtastspalte AS,1 und AS,2, mit denen demzufolge phasengleiche Signale erfaßt werden, gleich $P_{SM}$ gewählt.

Die optimierten Breiten $b_{ED,n}$ der einzelnen n Detektorelemente D1 - D5 lassen sich wiederum wie im vorhergehenden Beispiel mit Hilfe der Gleichungen (5), (5.1) und (5.2) bestimmen.

Mit den desweiteren hierzu erforderlichen Parametern

$$x_n = \quad 0 \text{ (Detektorelement auf optischer Achse)}$$

$$d_{ED} = \quad 13.5\mu m$$

$$q = \quad 0$$

$$\lambda = \quad 860nm$$

resultiert die gesuchte Größe $b_{ED,0}$ über die Gleichungen (5), (5.1), (5.2) zu

$$b_{ED,0} = \quad 91\mu m.$$

Wie aus den Gleichungen (5.1), (5.2) und (5) hervorgeht, wirkt sich die ausgedehnte Lichtquelle dahingehend aus, daß grundsätzlich eine größere Vernierperiode $P_V$ vorzusehen ist, um das erwähnte Übersprechen zwischen den einzelnen Detektorelementen zuverlässig zu vermeiden. Dementsprechend unterschiedlich zur ersten Variante wurde in diesem Ausführungsbeispiel auch die Teilungsperiode $P_{AT}$ der Abtastteilung gewählt.

Neben den erläuterten Beispielen existieren im Rahmen der vorliegenden Erfindung selbstverständlich noch eine Vielzahl weiterer Ausführungsmöglichkeiten.

**Patentansprüche**

1. Optische Positionsmeßeinrichtung, bestehend aus einer Meßteilung (MT) und einer relativ dazu in einer Meßrichtung (x) beweglichen Abtasteinheit (A), wobei

    a) die Abtasteinheit (A) folgende Komponenten umfaßt:

        a1) eine Lichtquelle (LQ),
        a2) eine im Abstand $D_{LQ}$ von der Lichtquelle (LQ) entfernt angeordnete Sendeteilung (ST),
        a3) eine Abtastteilung (AT) mit der Teilungsperiode $P_{AT}$, auf der im Fall der Relativbewegung von Abtasteinheit (A) und Meßteilung (MT) ein periodisches Streifenmuster (SM) mit der Streifenmusterperiode $P_{SM}$ resultiert,
        a4) eine im Abstand $D_{DET}$ von der Abtastteilung (AT) entfernt angeordnete Detektoranordnung (D) mit mehreren Blöcken (B1 - B5) aus einzelnen Detektorelementen (D1 - D20), wobei die Blöcke (B1 - B5) in Meßrichtung (x) periodisch mit der Detektorperiode $P_{DET}$ angeordnet sind und

    b) die Sendeteilung (ST) von der Meßteilung (MT) den Abstand u aufweist,
    c) die Abtastteilung (AT) von der Meßteilung (MT) den Abstand v aufweist und
    d) die Detektorperiode $P_{DET}$ gemäß der Beziehung

$$P_{DET} = m * | * P_V$$

gewählt ist, wobei

$$m = \left(1 + D_{DET}/(u + v + D_{LQ})\right)$$

und I = 1, 2, 3, ...,
und die als Vernierperiode bezeichnete Größe $P_V$ sich gemäß

$$1/P_V = \left|1/P_{SM} - 1/P_{AT}\right|$$

ergibt.

**2.** Optische Positionsmeßeinrichtung nach Anspruch 1, wobei im Fall von k um 360°/k phasenverschobenen Teil-Abtastsignalen die Vernierperiode $P_V$ gemäß

$$P_V = ((k * p)/I \pm 1) * P_{SM}$$

gewählt ist, mit

$$P_{AT} = (1 \pm I/(p * k)) * P_{SM}$$

und p = 1, 2, 3, .. und I teilerfremd zu k zu wählen ist.

**3.** Optische Positionsmeßeinrichtung nach Anspruch 1, wobei die Detektoranordnung (D) M Blöcke (B1 - B5) mit jeweils k einzelnen Detektorelementen (D1 - D20) umfaßt und die Abstände $x_{ED}$ der Mittellagen benachbarter Detektorelemente (D1 - D20) gemäß

$$x_{ED} = P_{DET}/k$$

gewählt sind.

**4.** Optische Positionsmeßeinrichtung nach Anspruch 1, wobei jedes k-te Detektorelement (D1 - D20) der Detektoranordnung (D) miteinander verbunden ist, so daß an der Detektoranordnung (D) k Teil-Abtastsignale (TAS0 - TAS270) mit einer Phasenverschiebung von 360°/k anliegen.

**5.** Optische Positionsmeßeinrichtung nach Anspruch 1, wobei jedes der n Detektorelemente (D1 - D20) in Meßrichtung (x) eine Breite

$$b_{ED,n} \geq (\tan \alpha_{max} - \tan \alpha_{min}) * D_{DET}$$

aufweist, mit:

$$\alpha_{min} = [(\arctan (x_{AS,N} + P_{SM}/2 - x_{LQ}/2)) / (u+v + D_{LQ})] - \arcsin (q * \lambda/P_{MT})$$

$$\alpha_{max} = [(\arctan (x_{AS,N} + P_{SM}/2 + x_{LQ}/2)) / (u+v + D_{LQ})] + \arcsin (q * \lambda/P_{MT})$$

wobei:

$x_{AS,N}$ :  Entfernung des N-ten Abtastspaltes AS von der optischen Achse OA

$x_{LQ}$:     Ausdehnung der Lichtquelle in Meßrichtung x,
u:         Abstand zwischen Sendeteilung und Meßteilung bzw. zwischen Meßteilung und Abtastteilung
$D_{LQ}$:    Abstand zwischen Lichtquelle und Sendeteilung
λ:         Wellenlänge der verwendeten Lichtquelle
q:         Beugungsordnung an Meßteilung, die primär zur Signalgewinnung beiträgt (0, 1, 2, .....);
$P_{MT}$:    Teilungsperiode der Meßteilung

**6.** Optische Positionsmeßeinrichtung nach Anspruch 3, wobei pro Block (B1 - B5) k = 4 einzelne Detektorelemente (D1 - D20) in einem derartigen Abstand zueinander angeordnet sind, so daß benachbarte Detektorelemente (D1 - D20) um 90° phasenverschobene Teil-Abtastsignale (TAS0 - TAS270) liefern.

**7.** Optische Positionsmeßeinrichtung nach Anspruch 1, wobei einem Detektorelement (D1 - D5) auf Seiten der Detektoranordnung mehrere durchlässige Bereiche (AS,1, AS,2) der Abtastteilung zugeordnet sind.

**Claims**

**1.** Optical position measuring device, comprising a measuring graduation (MT) and a scanning unit (A) which is movable relative thereto in a measuring direction (x),

    a) the scanning unit (A) comprising the following components:

        a1) a light source (LQ),
        a2) a transmitting graduation (ST) which is disposed removed at the spacing $D_{LQ}$ from the light source (LQ),
        a3) a scanning graduation (AT) with the graduation period $P_{AT}$, upon which a periodic strip pattern (SM) with the strip pattern period $P_{SM}$ results in the event of the relative movement of the scanning unit (A) and the measuring graduation (MT),
        a4) a detector arrangement (D) with a plurality of blocks (B1 - B5) made of individual detector elements (D1 - D20) which is disposed removed at the spacing $D_{DET}$ from the scanning graduation (AT), the blocks (B 1 - B5) being disposed periodically with the detector period $P_{DET}$ in the measuring direction (x) and

    b) the transmitting graduation (ST) has the spacing u from the measuring graduation (MT),
    c) the scanning graduation (AT) has the spacing v from the measuring graduation (MT) and
    d) the detector period $P_{DET}$ is chosen according to the relationship

$$P_{DET} = m * 1 * P_V$$

    in which

$$m = (1 + D_{DET}/(u + v + D_{LQ}))$$

    and l = 1, 2, 3, ...,
    and the dimension $P_V$ designated as the vernier period is produced according to

$$1/P_V = |1/P_{SM} - 1/P_{AT}|.$$

**2.** Optical position measuring device according to claim 1, the vernier period $P_V$ being chosen, in the case of k partial scanning signals phase-displaced by 360°/k, according to

$$P_V = ((k * p)/1 \pm 1) * P_{SM}$$

    with

$$P_{AT} = (1 \pm 1/(p * k)) * P_{SM}$$

and    p = 1, 2, 3, ... and 1 should be chosen relatively prime to k.

3. Optical position measuring device according to claim 1, the detector arrangement (D) comprising M blocks (B1 - B5) with k individual detector elements (D 1 - D20) respectively, and the spacings $x_{ED}$ of the mean positions of adjacent detector elements (D 1 - D20) being chosen according to

$$X_{ED} = P_{DET}/k.$$

4. Optical position measuring device according to claim 1, each $k^{th}$ detector element (D1 - D20) of the detector arrangement (D) being connected to each other so that k partial scanning signals (TAS0 - TAS270) with a phase displacement of 360°/k are present at the detector arrangement (D).

5. Optical position measuring device according to claim 1, each of the n detector elements (D1 - D20) having a width in the measuring direction (x)

$$b_{ED,n} \geq (\tan \alpha_{max} - \tan \alpha_{min}) * D_{DET}$$

with:

$$\alpha_{min} = [(\arctan(x_{AS,N} + P_{SM}/2 - x_{LQ}/2))/(u + v) + D_{LQ}] - \arcsin(q * \lambda/P_{MT})$$

$$\alpha_{max} = [(\arctan(x_{AS,N} + P_{SM}/2 + x_{LQ}/2])/(u + v) + D_{LQ}] + \arcsin(q * \lambda/P_{MT})$$

in which:

$x_{AS,N}$:    distance of the $N^{th}$ scanning gap AS from the optical axis OA $x_{LQ}$: extension of the light source in the measuring direction x,

u:    spacing between transmitting graduation and measuring graduation or between measuring graduation and scanning graduation

$D_{LQ}$:    spacing between light source and transmitting graduation

$\lambda$:    wavelength of the used light source

q:    diffraction order at the measuring graduation, which contributes primarily to the signal yield (0, 1, 2, ...)

$P_{MT}$:    graduation period of the measuring graduation

6. Optical position measuring device according to claim 3, k = 4 individual detector elements (D 1 - D20) being disposed per block (B1 - B5) at such a spacing to each other so that adjacent detector elements (D 1 - D20) deliver partial scanning signals (TAS0 - TAS270) which are phase-displaced by 90°.

7. Optical position measuring device according to claim 1, a plurality of transparent regions (AS,1, AS,2) of the scanning graduation being assigned to one detector element (D 1 - D5) on the part of the detector arrangement.

**Revendications**

1. Dispositif optique de mesure de position, comprenant une division de mesure (MT) et une unité de palpage (A) mobile par rapport à celle-ci dans une direction de mesure (x), dans lequel

a) l'unité de palpage (A) comprend les composants suivants :

a1) une source de lumière (LQ)
a2) une division d'émission (ST) disposée à une distance $D_{LQ}$ de la source de lumière (LQ),

a3) une division de palpage (AT) de période de division $P_{AT}$, sur laquelle, lors d'un déplacement relatif de l'unité de palpage (A) et de la division de mesure (MT), un motif de bandes (SM) périodique, avec la période de motif de bandes $P_{SM}$, est formé,

a4) un agencement de détecteurs (D) disposé à une distance $D_{DET}$ de la division de mesure (AT) et comprenant plusieurs blocs (B1-B5) de détecteurs élémentaires (D1-D20), les blocs (B1-B5), dans la direction de mesure (x), étant disposés de manière périodique avec la période de détecteurs $P_{DET}$ et

b) la division d'émission (ST) est disposée à la distance u par rapport à la division de mesure (MT),

c) la division de palpage (AT) est disposée à la distance v par rapport à la division de mesure (MT), et

d) la période de détecteur $P_{DET}$ est définie par la relation

$$P_{DET} = M * I * P_V$$

avec

$$m = (1 + D_{DET} / (u + v + D_{LQ}))$$

et I = 1, 2, 3,...,

et la grandeur $P_V$ définie comme période de vernier, est donnée par la relation

$$1/P_V = |\ 1/P_{SM} - 1/P_{AT}\ |$$

2. Dispositif optique de mesure de position selon la revendication 1, dans lequel dans le cas de k signaux de palpage partiels déphasés de $360°/k$, la période de vernier $P_V$ est choisie conformément à la relation

$$P_V = ((k * p)/ I \pm 1) * P_{SM}$$

avec

$$P_{AT} = (1 \pm I / (p * k)) * P_{SM}$$

et p=1, 2, 3, ... et I étant primaire relatif par rapport à k.

3. Dispositif optique de mesure de position selon la revendication 1, dans lequel l'agencement de détecteurs (D) comprend M blocs (B1-B5) avec chaque fois k détecteurs élémentaires (D1-D20) et les distances $x_{ED}$ des positions moyennes de détecteurs élémentaires (D1-D20) voisins sont choisies conformément à la relation

$$x_{ED} = P_{DET}/k$$

4. Dispositif optique de mesure de position selon la revendication 1, dans lequel les k-ième détecteurs élémentaires (D1-D20) de l'agencement de détecteurs (D) sont reliés entre eux, de telle sorte que l'on obtient au niveau de l'agencement de détecteurs (D), k signaux de palpage partiels (TAS0-TAS270) avec un déphasage de $360°/k$.

5. Dispositif optique de mesure de position selon la revendication 1, dans lequel chacun des n détecteurs élémentaires (D1-D20), dans la direction de mesure (x), a une largeur

$$b_{ED,n} \geq (\tan \alpha_{max} - \tan \alpha_{min}) * D_{DET}$$

avec

$$\alpha_{min} = [(\arctan (x_{AS,N} + P_{SM}/2 - X_{LQ}/2)) / (u + v + D_{LQ})] - \arcsin (q*\lambda/P_{MT})$$

$$\alpha_{min} = [(\arctan (x_{AS,N} + P_{SM}/2 - x_{LQ}/2)) / (u + v + D_{LQ})] - \arcsin (q*\lambda/P_{MT})$$

$x_{AS,N}$    distance de la n-ième fente de palpage AS à l'axe optique OA,

$x_{LQ}$    étendue de la source de lumière dans la direction de mesure x,

u    distance entre division d'émission et division de mesure, ou entre division de mesure et division de palpage,

$D_{LQ}$    distance entre source de lumière et division d'émission,

$\lambda$    longueur d'onde de la source de lumière utilisée,

q    ordre de réfraction sur la division de mesure qui contribue en premier lieu à l'obtention de signaux (0, 1, 2, ...) ;

$P_{MT}$    période de division de la division de mesure.

6. Dispositif optique de mesure de position selon la revendication 3, dans lequel pour chaque bloc (B1-B5), k=4 détecteur élémentaires (D1-D20) sont disposés à une distance réciproque telle que des détecteurs élémentaires (D1-D20) voisins fournissent des signaux de palpage partiels (TAS0-TAS270) déphasés de 90°.

7. Dispositif optique de mesure de position selon la revendication 1, dans lequel à un détecteur élémentaire (D1-D5) côté agencement de détecteurs sont associées plusieurs zones (AS,1, AS,2) transparentes de la division de mesure.

FIG. 1

EP 1 173 726 B1

FIG. 2

FIG. 3

ST    MT    AT    TAS0

$P_{SM}$

TAS90

$P_V$

TAS180

TAS270

$P_{ST}$    $P_{MT}$    $P_{AT}$

FIG. 4

X

$X_{AS,1}$    OA    AS,N

AS,1    AT

LQ

16

FIG. 5

FIG. 6